# EUROPÄISCHE PATENTANMELDUNG

(11) **EP 2 384 883 A1**
(43) Veröffentlichungstag der Anmeldung: **09.11.2011**
(21) Anmeldenummer: 10162083.9
(22) Anmeldetag: 06.05.2010
(51) Int. Cl.: B29C 69/02, B65D 81/32, B29C 35/08, B29C 65/06, B29C 65/14, B29C 65/16, B29C 65/48

(54) **Verfahren zur Herstellung einer Kartusche sowie eine solche Kartusche**

(71) Anmelder: Sulzer Mixpac AG, 9469 Haag (CH)
(72) Erfinder: Chojetzki, Thorsten, 8050, Zürich (CH); Habibi-Naini, Sasan, Dr., 8486, Rikon (CH)
(74) Vertreter: Sulzer Management AG

(57) **Zusammenfassung**

Eine Kartusche (1) für eine fluide Füllmasse umfasst ein Rohrelement (2,20) und ein Auslasselement (3), wobei das Auslasselement an einem ersten Ende (4,24) des Rohrelements angeordnet ist. Das Auslasselement enthält einen Auslasskanal (6,26) für die Füllmasse, wobei der Auslasskanal einen Innendurchmesser (7,27) aufweist, und das Rohrelement einen Innendurchmesser (8,28) aufweist, wobei der Innendurchmesser des Auslasskanals kleiner als der Innendurchmesser des zugehörigen Rohrelements ist. Das Rohrelement (2,20) umgibt einen Vorratsbereich (9,29). Der Vorratsbereich ist mit dem Auslasskanal derart verbunden, dass die Füllmasse aus dem Vorratsbereich durch den Auslasskanal austragbar ist. Das Rohrelement weist ein zweites Ende (5,25) auf, wobei das zweite Ende mittels eines Kolbens verschliessbar ist, sodass die Füllmasse im Vorratsbereich lagerbar ist, wenn der Auslasskanal verschlossen ist und der Kolben das zweite Ende des Rohrelements verschliesst. Das Rohrelement ist als extrudiertes Rohrelement ausgebildet. Des weiteren ist ein Verfahren zur Herstellung einer derartigen Kartusche gezeigt.

## Beschreibung

Die Erfindung betrifft eine Kartusche zum Lagern und Ausbringen einer fluiden Füllmasse sowie ein Verfahren zur Herstellung einer derartigen Kartusche. Eine derartige Kartusche wird in der Regel im Spritzgiessverfahren aus Kunststoff hergestellt. Eine derartige Kartusche kann sowohl für eine einzige Komponente als Einkomponentenkartusche ausgeführt sein oder für mehrere Komponenten als Mehrkomponentenkartusche.

Eine derartige Kartusche ist aus der EP 0502519 bekannt. Die dort gezeigte Mehrkomponentenkartusche wird für plastische Füllmassen eingesetzt, wie beispielsweise Klebstoffe oder Dichtstoffmassen aus zwei Komponenten, bei welchen die Komponenten vor Gebrauch getrennt voneinander aufbewahrt und erst zum Gebrauch miteinander vermischt werden.

Insbesondere bezieht sich die EP 0502519 auf eine aus Kunststoffspritzguss hergestellte Mehrkammerkartusche für plastische Füllmassen, mit mindestens zwei ineinander angeordneten Kartuschenrohrwandteilen zur Bildung mindestens zweier Kammern zur Aufnahme jeweils einer Komponente, einem am vorderen Ende der Kartuschenrohrwandteile angeordneten Stirnwandteil, an welchem ein Mundstück zur Ausgabe der Komponenten aus der Kartusche gebildet ist, und mit am hinteren Ende der Kartuschenrohrwandteile eingesetzten Kolben zum Ausdrücken der Komponenten. Das Stirnwandteil ist als gesondertes Kopfstück ausgebildet und die Kartuschenrohrwandteile sind ebenfalls als jeweils separat hergestellte Spritzgussteile ausgebildet, und zur Verbindung der Kartuschenrohrwandteile mit dem Kopfstück sind Schnappverbindungen vorgesehen.

Aufgabe der Erfindung ist es, ein Verfahren zur Herstellung einer Kartusche der genannten Art bereitzustellen, mittels dessen die Kartusche kostengünstiger und mit einfacheren Spritzgiesswerkzeugen fertigen lässt.

Eine Kartusche für eine fluide Füllmasse umfasst ein Rohrelement und ein Auslasselement, wobei das Auslasselement an einem Ende des Rohrelements angeordnet ist. Das Auslasselement enthält einen Auslasskanal für die fluide Füllmasse, wobei der Auslasskanal einen Innendurchmesser aufweist, und das Rohrelement einen Innendurchmesser aufweist, wobei der Innendurchmesser des Auslasskanals kleiner als der Innendurchmesser des zugehörigen Rohrelements ist. Das Rohrelement umschliesst einen Vorratsbereich. Der Vorratsbereich kann eine fluide Füllmasse enthalten. Der Vorratsbereich ist mit dem Auslasskanal derart verbunden, dass die fluide Füllmasse aus dem Vorratsbereich durch den Auslasskanal austragbar ist. Der Auslasskanal kann in einem Hals angeordnet sein. Das Rohrelement weist ein zweites Ende auf, wobei das zweite Ende mittels eines Kolbens verschliessbar ist, sodass die fluide Füllmasse im Vorratsbereich lagerbar ist, wenn der Austrittskanal verschlossen ist und der Kolben das zweite Ende des Rohrelements verschliesst. Der Kolben ist im Rohrelement verschiebbar, sodass bei Bewegung des Kolbens in Richtung des ersten Endes die fluide Füllmasse aus dem Vorratsbereich austragbar ist. Das Rohrelement ist als extrudiertes Rohrelement ausgebildet.

Das Verfahren zur Herstellung der Kartusche umfasst einen ersten Schritt, in welchem das Auslasselement im Spritzgiessverfahren gefertigt wird und einen zweiten Schritt in welchem das Rohrelement im Extrusionsverfahren hergestellt wird. Anschliessend wird in einem dritten Schritt das Auslasselement und das Rohrelement zusammengefügt.

Das Zusammenfügen kann beispielsweise durch Schweissen, insbesondere Reibschweissen, Infrarotschweissen oder Laserschweissen oder auch durch Kleben erfolgen.

Ein im Extrusionsverfahren hergestelltes Rohrelement hat im Vergleich zu einem im Spritzgiessverfahren hergestelltes Rohrelement ein höheres Molekulargewicht sowie eine höhere Viskosität.

Zur Extrusion von dünnwandigen Rohren sind insbesondere die Kunststoffe Polyamid (PA), Polypropylen (PP) und Polybuthylterephthalat (PBT) grundsätzlich geeignet.

Für die Definition von Extrusionsmaterial wird die Schmelzemassenfliessrate, abgekürzt MFR (melt mass flow rate), die Schmelzevolumenfliessrate, abgekürzt MVR (melt volume flow rate), die Relative Viskosität oder die Molekülmasse herangezogen.

Die MFR wird umgangssprachlich auch als MFI (melt flow index) bezeichnet. Die MFR ist die Extrusionsrate einer Kunststoffschmelze durch eine Düse von definierter Länge und definiertem Durchmesser unter vorbestimmten Temperatur- und Lastbedingungen sowie der Lage eines Kolbens in einem Zylinder eines Extrusionsplastometers. Die Schmelzemassenfliessrate wird als die Masse, die nach einer bestimmten Zeitdauer extrudiert worden ist, definiert. Üblicherweise wird die MFR in der Einheit Gramm/10 min angegeben.

Die Schmelzevolumenfliessrate (MVR) ist die Extrusionsrate einer Kunststoffschmelze durch eine Düse von definierter Länge und definiertem Durchmesser unter vorbestimmten Temperatur- und Lastbedingungen sowie der Lage eines Kolbens in einem Zylinder eines Extrusionsplastometers. Die Schmelzemassenfliessrate wird das Volumen, welches nach einer bestimmten Zeitdauer extrudiert worden ist, definiert. Es wird die Distanz, die ein Kolben in einem Extrusionsplastometer innerhalb einer definierten Zeit bestimmt. Da der Innendurchmesser des Zylinders, in welchem sich der Kolben befindet, durch die ISO 1133 genau vorgegeben ist, kann das ausgeschobene Volumen genau ermittelt werden.

Kunststoffe, insbesondere Polyamid bilden bei der Verarbeitung eine dünnflüssige Schmelze. Für die Extrusion, vor allem bei dünnwandigen Rohren, wird eine hohe Schmelzefestigkeit benötigt. Dies wird durch eine hohe Molekülmasse erreicht. Die Molekülmasse lässt sich durch die Relative Viskosität ableiten. Beispielsweise beträgt die Relative Viskosität von PA6 für Extrusionszwecke mindestens 3, bevorzugt im Bereich von 3 bis einschliesslich 6 gemäss ISO 307 (ermittelt nach dem Verfahren von Huggins) 1 % [m/v] in 96% [m/m] Schwefelsäure. Beispielsweise liegt die Relative Viskosität für Ultramid ® B40 L 01 der BASF SE 3.89 bis 4.17, für Ultramid ® B50 L 01 der BASF SE 4.78 bis 5.18.

Für PP ist die Schmelzvolumenfliessrate MFR kleiner als 2 bei 230 °C und 2.16 kg Prüftemperatur bzw. Prüfgewicht für Extrusion, bevorzugt liegen die Werte zum MFR für schwer fliessende Kunststoffe bei 0.3 oder 0.5 g/10min (230 °C, 2.16 kg).

Bei PBT wird oft die Viskositätszahl nach ISO 1628 (o-Dichlorbenzol, Phenol 1:1, c=0.5 g/100ml Lösungsmittel) herangezogen. Ein PBT mit einer Viskositätszahl von mindestens 130 ml/g wird für die Extrusion eingesetzt. Bevorzugt liegt die Viskositätszahl im Bereich von 130 bis einschliesslich 180, besonders bevorzugt liegt die Viskositätszahl im Bereich von 130 bis einschliesslich 160 ml/g.

Die Oberfläche eines im Spritzgiessverfahren hergestellten Rohrelements ist beidseitig durch das Werkzeug vorgegeben, hingegen ist beim Extrusionsverfahren nur eine der Oberflächen des Rohrelements vorgegeben. Üblicherweise wird die Oberfläche vorgegeben, auf deren Masshaltigkeit es ankommt oder die einfacher zu kalibrieren ist. Die nicht kalibrierte Oberfläche zeichnet sich durch eine gewisse Welligkeit aus, die bei Rohrelementen für Kartuschen bereits mit blossem Auge erkennbar sein kann.

Bei der erfindungsgemässen Kartusche werden somit das Rohrelement und das Auslasselement jeweils separat hergestellt, wodurch die erforderlichen Spritzgiesswerkzeuge für das Auslasselement sehr einfach ausgeführt und billig sein können.

Des weiteren ist eine effizientere Kühlung des Spritzgiesswerkzeugs möglich, was zur Folge hat, dass die Zykluszeit zur Herstellung einer Kartusche verkürzt werden kann.

Zudem ist eine masshaltigere Herstellung der Kartusche möglich, da der Verzug des Halses am Auslasselement reduziert wird.

Das Entformen des separierten Auslasselements geht schneller, denn das Ziehen langer Kerne, welches bei Herstellung einer kompletten Kartusche im Spritzgiessverfahren erforderlich ist, entfällt.

Ein extrudiertes Rohr benötigt keine Entformungsschräge. Dadurch kann der Durchmesser im Rahmen der Fertigungstoleranzen konstant gehalten werden. Dies hat zur Folge, dass der Kolben eine einfachere Bauart aufweisen kann, der Kolben muss nicht den verändernden Durchmesser eines im Spritzgiessverfahren hergestellten Rohrs ausgleichen und gleichzeitig dichten. Des weiteren nehmen für ein nicht konisches Rohr die Austragskräfte nicht als Funktion des Dosierwegs zu, sondern bleiben im wesentlichen konstant.

Bei einer einteiligen Kartusche sind für die üblicherweise vorhandene Länge des Vorratsbereichs in der Herstellung im Spritzgiessverfahren lange Fliesswege für die Polymerschmelze erforderlich. Dies bedingt durch den Druckverlust nicht nur einen hohen Einspritzdruck, sondern auch geeignete physikalische Eigenschaften der Polymerschmelze, um die langen Fliesswege mit Polymerschmelze füllen zu können. Das heisst, überraschenderweise können auch Polymerschmelzen mit höherer Viskosität für das Auslasselement verwendet werden. Hierdurch wird die Palette der einsetzbaren Polymere erhöht, sodass auch Polymere mit höherem mittleren Molekulargewicht verarbeitet werden können.

Ein weiterer Vorteil, der mit dem Einsatz von extrudierten Rohren verknüpft ist, liegt darin begründet, dass extrudierte Rohre aus oben genannten Gründen bessere mechanische Eigenschaften bei gleicher Wanddicke oder alternativ dazu kann die Wanddicke bei gleichbleibenden mechanischen Eigenschaften reduziert werden, womit eine Material- und Kosteneinsparung verbunden ist.

Das Rohrelement kann erfindungsgemäss im Extrusionsverfahren auf einfachste Weise erhalten werden. Ein zusätzlicher Vorteil eines extrudierten Rohrelements besteht darin, dass seine Länge ohne Aufwand beliebig angepasst werden kann. Es genügt, das Rohr für das Rohrelement auf die gewünschte Länge zu bringen, beispielsweise durch Zuschneiden. Dieser Vorteil besteht bei einem im Spritzgiessverfahren hergestellten Rohrelement nicht, da mit dem Spritzgiessverfahren nur Rohrelemente einer einmal vorbestimmten Länge hergestellt werden können. Selbstverständlich ist es möglich, ein im Spritzgiessverfahren hergestelltes Rohrelement nachträglich in einem separaten Arbeitsschritt auf die gewünschte Länge zuzuschneiden. Ein Rohrelement, welches hingegen durch ein Extrusionsverfahren hergestellt wird, kann direkt im Anschluss an die Extrusion ohne Umrüsten erfolgen, sodass dieser Verfahrensschritt ebenfalls kontinuierlich, d.h. ohne Unterbrechung oder Zwischenlager erfolgen kann.

Vorteilhafterweise weist das Auslasselement eine dem Querschnitt des ersten Endes des Rohrelements entsprechende Nut auf, sodass das erste Ende des Rohrelements in die Nut des Auslasselements einsteckbar ist. Dadurch kann der Zusammenbau von Rohrelement und Auslasselement sehr einfach erfolgen.

Insbesondere weist die Nut einen Nutgrund, einen ersten und einen zweiten Schenkel auf, wobei der erste Schenkel innerhalb des Rohrelements angeordnet ist und der zweite Schenkel ausserhalb des Rohrelements angeordnet ist.

Nach einem bevorzugten Ausführungsbeispiel ist zumindest einer der zweiten Schenkel länger als der erste Schenkel. Das Längenverhältnis des zweiten Schenkels zum ersten Schenkel ist grösser als eins, beträgt insbesondere 1.05 bis 3.0, besonders bevorzugt 1.1 bis 2.5.

Der Schenkel weist ein Schenkelende auf, wobei der Schenkel eine Wanddicke haben kann, welche am Nutgrund grösser ist als am Schenkelende. Vorteilhafterweise weist der Schenkel konische Form auf, sodass das Rohrelement ohne Schwierigkeiten in die Nut eingesteckt werden kann. Materialreste oder Klebstoff können sich in dem Zwischenraum zwischen Rohrelement und Schenkelwand ansammeln. Einerseits kann insbesondere eine gute Schweiss- oder Klebverbindung erhalten werden. Des weiteren verbleiben die Materialreste oder der Klebstoff in dem Zwischenraum zwischen Schenkel und Rohrelement und kann nicht in den Vorratsbereich eintreten oder an der Aussenwand des Rohrelements austreten. An der Verbindungsstelle sind somit keinerlei Klebstoffreste oder Materialreste sichtbar.

Dementsprechend ist nach diesem vorteilhaften Ausführungsbeispiel der Abstand zwischen dem Schenkel und dem Rohrelement am Nutgrund kleiner als am Schenkelende. Das heisst, jeder der Schenkel weist eine dem zugehörigen Rohrelement zugewendete Wand auf, wobei der Abstand zumindest einer der Wände des Schenkels von dem Mantel des Rohrelements im zusammengebauten Zustand am Nutgrund kleiner als am Schenkelende ist.

Es hat sich als besonders günstig erwiesen, wenn das erste Ende des Rohrelements mit der Nut des Auslasselements durch eine Schweissverbindung verbunden ist. Insbesondere kann die Schweissverbindung eine Reibschweissverbindung, eine Infrarotschweissverbindung oder eine Laserschweissverbindung sein. Das erste Ende des Rohrelements kann mit der Nut auch durch eine Klebeverbindung verbunden sein.

Das Auslasselement enthält nach einem bevorzugten Ausführungsbeispiel eine Mehrzahl von Auslassöffnungen. Ein derartiges Auslasselement kommt für Kartuschen zum Einsatz, welche zur Lagerung und zum Austrag von mehreren Komponenten bestimmt sind, die in der Folge als Mehrkomponentenkartuschen bezeichnet werden. Damit die Komponenten voneinander getrennt bleiben, bis sie ihrer bestimmungsgemässen Verwendung zugeführt werden, ist jede der Auslassöffnungen mit je einem Rohrelement verbunden. Das heisst, für jede der Komponenten ist ein eigener Austrittskanal vorgesehen, der vom entsprechenden Vorratsbereich zu der Austrittsöffnung am Auslasselement führt.

Mehrkomponentenkartuschen enthalten nach einer ersten Ausführungsform ein Innenrohr und ein Aussenrohr. Das Innenrohr befindet sich innerhalb des Aussenrohrs, beispielsweise ist das Innenrohr konzentrisch zum Aussenrohr angeordnet. Beim Reibschweissen wird das Innenrohr gegebenenfalls etwas länger ausgeführt, d.h. die Rohre werden in einem Arbeitsgang, aber leicht zeitversetzt verschweisst.

Für eine Mehrkomponentenkartusche kann zumindest ein erstes und ein zweites Rohrelement vorgesehen sein, wobei das erste Rohrelement eine erste Achse aufweist und das zweite Rohrelement eine zweite Achse aufweist und die erste und zweite Achse im wesentlichen parallel zueinander angeordnet sind, sodass das erste Rohrelement neben dem zweiten Rohrelement angeordnet ist

Alternativ kann für eine Mehrkomponentenkartusche ein erstes und ein zweites Rohrelement vorgesehen sein, wobei das erste Rohrelement eine erste Achse aufweist und das zweite Rohrelement eine zweite Achse aufweist und die erste und zweite Achse zusammen fallen oder nur geringen Abstand voneinander haben, sodass das erste Rohrelement innerhalb des zweiten Rohrelements angeordnet ist.

Eine Kartusche, insbesondere eine Mehrkomponentenkartusche kommt vorteilhafterweise zum Einsatz, wenn eine fluide Füllmasse in für eine einfache Handhabung geeigneten Mengen gelagert und ausgetragen werden soll. Eine derartige Mehrkomponentenkartusche wird beispielsweise für Dichtmassen, Klebstoffe, Füllmassen in industriellen Anwendungen verwendet.

Im Folgenden wird die Erfindung sowohl in apparativer als auch in verfahrenstechnischer Hinsicht anhand von Ausführungsbeispielen und anhand der Zeichnungen näher erläutert. In den schematischen, nicht masstäblichen Zeichnungen zeigen teilweise im Schnitt:
Fig. 1a einen Längsschnitt durch eine erfindungsgemässe Mehrkomponentenkartusche,
Fig. 1b eine Stirnansicht der Mehrkomponentenkartusche gemäss Fig. 1 a,
Fig. 1c eine perspektivische Darstellung der Mehrkomponentenkartusche gemäss Fig. 1a,
Fig. 2a einen Querschnitt durch ein Auslasselement nach Fig. 1,
Fig. 2b eine Stirnansicht des Auslasselements gemäss Fig. 2a,
Fig. 3 eine perspektivische Ansicht eines weiteren Ausführungsbeispiels eines Auslasselements,
Fig. 4 eine perspektivische Ansicht eines weiteren Ausführungsbeispiels eines Auslasselements,
Fig. 5 eine perspektivische Ansicht eines weiteren Ausführungsbeispiels eines Auslasselements,
Fig. 6 eine perspektivische Ansicht eines weiteren Ausführungsbeispiels eines Auslasselements,
Fig. 7 eine Ansicht eines Rohrelements.

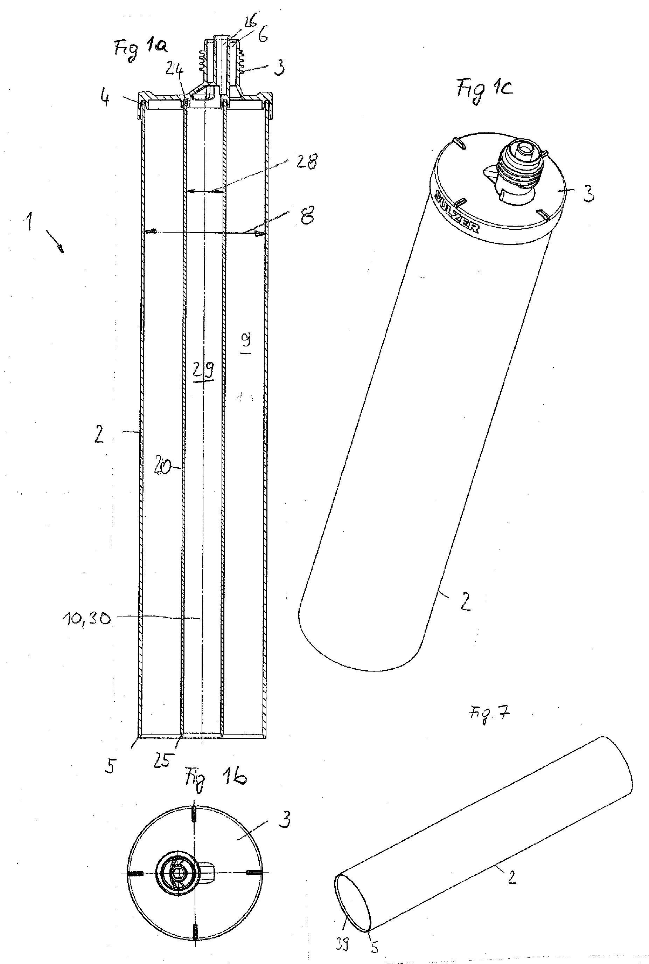

Die in den Fig. 1a und dargestellte Kartusche ist eine Mehrkomponentenkartusche, welche als Koaxialkartusche ausgebildet ist. Die Kartusche 1 für eine fluide Füllmasse umfasst ein erstes Rohrelement 2 und ein zweites Rohrelement 20. Ein Auslasselement 3 ist an einem ersten Ende 4, 24 des ersten sowie des zweiten Rohrelements 2, 20 angeordnet. Das Auslasselement 3 enthält einen ersten Auslasskanal 6 und einen zweiten Auslasskanal 26 für die fluide Füllmasse. Das Auslasselement kann mittels eines nicht dargestellten Verschlusselements verschlossen werden.

Der Auslasskanal 6, 26 weist einen Innendurchmesser 7, 27 auf. Das Rohrelement 2, 20 weist einen Innendurchmesser 8, 28 auf. Der Innendurchmesser 7, 27 des Auslasskanals ist kleiner als der Innendurchmesser 8, 28 des zugehörigen Rohrelements.

Jedes der Rohrelemente 2, 20 hat ein zweites Ende 5, 25. Das zweite Ende kann einen Kolben aufnehmen. Das Rohrelement 2, 20 umgibt einen Vorratsbereich 9, 29. Der Vorratsbereich 9,29 kann eine fluide Füllmasse enthalten. Wenn das zweite Ende 5, 25 des Rohrelements durch den Kolben verschlossen ist und jeder der Auslasskanäle durch ein Verschlusselement verschlossen ist, kann die fluide Füllmasse in der Kartusche gelagert und transportiert werden, da sowohl das zweite Ende 5, 25 des entsprechenden Rohrelements als auch jeder der Auslasskanäle 6, 26 fluiddicht verschlossen ist. Der Vorratsbereich 9, 29 ist mit dem Auslasskanal 6, 26 derart verbunden, dass die fluide Füllmasse aus dem Vorratsbereich 9, 29 durch den Auslasskanal 6, 26 austragbar ist.

Der Kolben ist im Rohrelement 2, 20 verschiebbar, sodass bei Bewegung des Kolbens in Richtung des ersten Endes 4, 24 des entsprechenden Rohrelements 2, 20 die fluide Füllmasse aus dem Vorratsbereich 9, 29 austragbar ist.

Das Rohrelement 2, 20 ist als extrudiertes Rohrelement ausgebildet. Ein derartiges extrudiertes Rohrelement kann kontinuierlich im Extrusionsverfahren hergestellt werden und ist daher sehr kostengünstig in der Herstellung. Zudem kann das Rohrelement mittels des Extrusionsverfahrens im Gegensatz zum Spritzgiessverfahren in beliebiger Länge hergestellt werden. Zudem weist das Rohrelement einen konstanten Querschnitt auf, was eine verbesserte Dichtung des Kolbens erlaubt, welcher in dem Rohrelement gleitet.

Das Auslasselement 6 wird in der Regel im Spritzgiessverfahren hergestellt. Wenn das Auslasselement 6 nicht einstückig mit dem Rohrelement im Spritzgiessverfahren hergestellt werden muss, kann ein Spritzgiesswerkzeug von sehr einfacher Bauart zum Einsatz kommen. In diesem Fall ergeben sich überraschenderweise wirtschaftliche Vorteile gegenüber dem Konzept der Funktionsintegration, welches in der Fachwelt im allgemeinen bevorzugt wird. Unter Funktionsintegration wird ein Konzept verstanden, nach welchem unter anderem die Anzahl der Einzelteile möglichst reduziert wird, aus welchen ein komplexes Bauteil zusammengesetzt ist. Das heisst, ein Bauteil, wie beispielsweise eine Kartusche, sollte nach Möglichkeit gemäss des Konzepts der Funktionsintegration in einem einzigen Stück hergestellt sein. Unstreitig sind mit diesem Konzept der Funktionsintegration eine Reihe von Vorteilen verknüpft, wie beispielsweise die Elimination von Dichtigkeitsproblemen, der Wegfall von Zusammenbauschritten, das heisst von vielfältigen logistischen und technischen Problemen, welche durch den Zusammenbau bedingt sind.

Überraschenderweise hat sich gezeigt, dass die Kombination eines extrudierten Rohrelements mit einem Auslasselement zu einer Vereinfachung sowohl der Herstellung des Rohrelements als auch des Auslasselements führt. Würde man das Rohrelement im Spritzgiessverfahren herstellen, wäre es naheliegend, das Rohrelement mittels einer Schnappverbindung mit dem Auslasselement zu verbinden. Allerdings ist es für eine Schnappverbindung erforderlich, dass die beiden zusammenzufügenden Teile ineinander greifen. Am Rohrelement muss daher eine Nut oder ein Vorsprung angebracht sein, welcher in einen entsprechenden Vorsprung oder eine Nut des Auslasselements eingreift. Nur durch den hierdurch gebildeten Formschluss kann eine dauerhafte und fluiddichte Verbindung der beiden Bauteile Auslasselement und Rohrelement gewährleistet werden. Das Ineinandergreifen der Nut des ersten Bauteils in den entsprechenden Vorsprung des zweiten Bauteils bedingt allerdings Hinterschnitte, was komplexe Werkzeuggeometrien für beide Bauteile bedingt. Zudem bedingt eine getrennte Herstellung von Auslasselement und Rohrelement im Spritzgiessverfahren einen zusätzlichen Montageschritt, sodass die Lehrmeinung eigentlich heutzutage in Richtung des Konzepts der Funktionsintegration geht.

Überraschenderweise ergibt sich jedoch ein unerwarteter Kostenvorteil, wenn ein Rohrelement verwendet wird, welches im Extrusionsverfahren hergestellt worden ist. In diesem Fall ist die Herstellung des Rohrelements derart vereinfacht, dass der Zusammenbau von Rohrelement und Auslasselement wirtschaftlich nicht mehr ins Gewicht fällt.

Das Spritzgiesswerkzeug für das Auslasselement ist zudem deswegen kostengünstiger, weil auf die für die Herstellung des langen, dünnwandigen Rohrelements erforderlichen hohen Einspritzdrücke verzichtet werden kann, wenn dieses Rohrelement in Kombination mit dem Auslasselement in einem Stück gefertigt werden muss. Zudem kann auf die Kernzüge, welche zur üblichen Herstellung des Rohrelements erforderlich sind, vollständig verzichtet werden, sodass sich hier ein unerwarteter Kostenvorteil für die erfindungsgemässe Lösung ergibt.

Des weiteren ergibt sich als Vorteil, dass das Rohrelement aus einem anderen Material hergestellt sein kann als das Auslasselement.

Fig. 1b ist die Stirnansicht des Auslasselements 3. In der Stirnansicht ist erkennbar, dass das Auslasselement nicht rotationssymmetrisch in Bezug auf die Achse 10, 30 des entsprechenden Rohrelements 2, 20 angeordnet ist. Es muss gewährleistet sein, dass die Füllmasse von jedem der Vorratsbereiche 9, 29 in den Auslasskanal gelangen kann. Insbesondere wenn der innere Durchmesser 7 des Auslasskanals 6 kleiner ist als der innere Durchmesser des Rohrelements 20, ist es nicht möglich, die Füllmasse des ringförmig um den Vorratsbereich 29 angeordneten Vorratsbereich 9 auszutragen, wenn gleichzeitig die Randbedingung erfüllt sein muss, dass die Komponenten der fluiden Füllmasse auch in den Auslasskanälen, 6, 26 noch voneinander getrennt gefördert werden müssen. Aus diesem Grund ist es vorteilhaft, wenn das Auslasselement exzentrisch in Bezug auf die Achse 10, 30 des entsprechenden Rohrelements angeordnet ist. Alternativ könnte die Achse 30 exzentrisch liegen, der Auslass könnte dann zentrisch angeordnet sein.

Fig. 1c eine perspektivische Darstellung der Mehrkomponentenkartusche gemäss Fig. 1a. Das Rohrelement 2 und das Auslasselement 3 sind im zusammengebauten Zustand dargestellt.

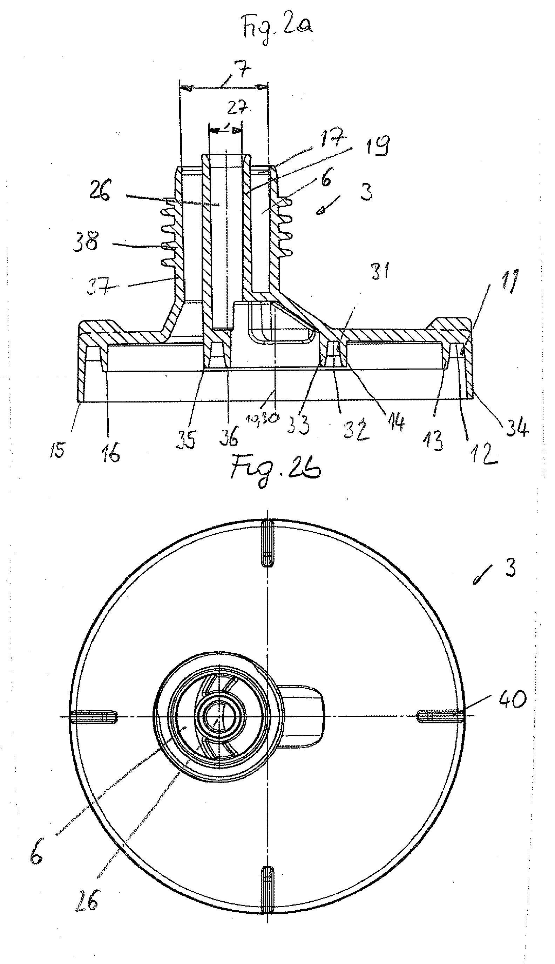

Fig. 2a zeigt einen Querschnitt durch ein Auslasselement nach Fig. 1, Fig. 2b zeigt eine stirnseitige Ansicht des Auslasselements.

Fig. 2a ein Detail des in Fig. 1a dargestellten Auslasselements. Die Auslasskanäle sind in einem Hals 37 angeordnet. Der Hals ist in der Darstellung gemäss Fig. 1d mit einem Aussengewinde 38 ausgestaltet. Dieses Aussengewinde 38 dient der Aufnahme eines um die Längsachse des Halses 37 drehbaren Verschlussmechanismus oder der Aufnahme eines Mischelements, welche alternativ auf den Hals aufschraubbar sind. Der Verschlussmechanismus oder das Mischelement sind nicht dargestellt. Der Auslasskanal 26 verbindet den Vorratsbereich 29 mit der Auslassöffnung 18. Der Auslasskanal 6, der ringförmig um den Auslasskanal 26 angeordnet ist und von diesem durch eine Trennwand 19 getrennt ist, verbindet den Vorratsbereich 9 mit der Auslassöffnung 17. Die Trennwand kann als Rohr ausgebildet sein, sie könnte aber auch den Hals in zwei oder mehr Sektoren teilen.

Gemäss Fig. 2a weist das Auslasselement 3 eine dem Querschnitt des ersten Endes 4, 24 des Rohrelements 2, 20 entsprechende Nut 11, 31 auf, sodass das erste Ende 4, 24 des Rohrelements in die Nut 11, 31 des Auslasselements 3 einsteckbar ist.

Die Nut 11, 31 besteht aus einem Nutgrund 12, 32, an welchen ein erster Schenkel 13, 33 und ein zweiter Schenkel 14, 34 anschliesst. Mit anderen Worten wird die Nut durch den Nutgrund 12, 32, sowie den entsprechenden ersten und zweiten Schenkel 13, 14, 33, 34 gebildet. Der erste Schenkel 13, 33 ist innerhalb des Rohrelements 2, 20 angeordnet und der zweite Schenkel 14, 34 ist ausserhalb des Rohrelements 2, 20 angeordnet.

Der zweite Schenkel 14, 34 ist länger als der erste Schenkel 13, 33. Der erste Schenkel 13, 33 weist ein erstes Schenkelende 15, 35 auf. Der zweite Schenkel 14, 34 weist ein zweites Schenkelende 16, 36 auf, wobei zumindest einer der ersten oder zweiten Schenkel eine Wanddicke hat, welche am Nutgrund 12, 32 grösser als am entsprechenden Schenkelende ist.

Jeder der Schenkel 13, 14, 33, 34 weist eine dem zugehörigen Rohrelement 2, 20 zugewendete Wand auf, wobei der Abstand zumindest einer der Wände des Schenkels 13, 14, 33, 34 von dem Mantel des Rohrelements im zusammengebauten Zustand am Nutgrund kleiner als am Schenkelende ist.

Das erste Ende 4, 24 des Rohrelements 2, 20 ist mit der Nut 11, 31 des Auslasselements 3 nach einer bevorzugten Variante durch eine Schweissverbindung verbunden.

Fig. 2b zeigt eine Stirnansicht des Auslasselements gemäss Fig. 2a. Diese Ansicht zeigt die Anordnung des Halses, welcher die beiden Auslasskanäle 6, 26 enthält. Des weiteren zeigt Fig. 2a eine Mehrzahl von Vorsprüngen 40 auf der Oberfläche des Auslasselements 3. Diese Vorsprünge dienen in erster Linie beim Schweissverfahren als Mitnehmer für das rotierende Werkzeug.

Wird die Verbindung zwischen Rohrelement und Auslasselement erzeugt, erfolgt dies bevorzugt durch Reibschweissen. Beim Reibschweissen wird durch Reibung zweier Flanken aneinander Wärme erzeugt. Durch die erzeugte Wärme schmilzt die Oberfläche des Rohrelements oder Auslasselements an und eine Verbindung zwischen den beiden Oberflächen kommt zustande.

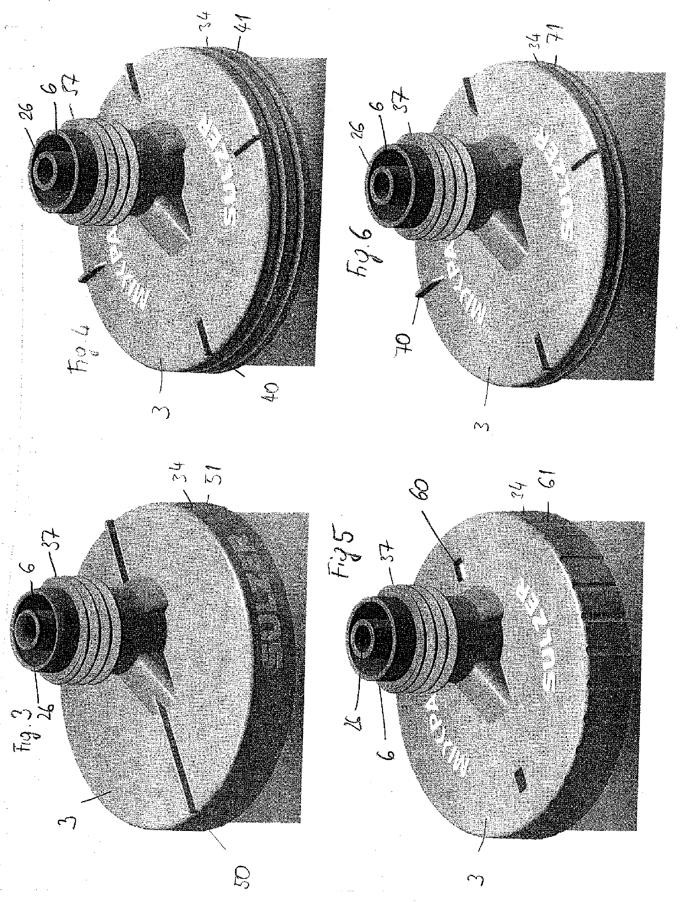

Alternative Ausführungsformen für die Vorsprünge 40 sind in den Varianten gemäss Fig. 3-6 gezeigt.

Fig. 3 zeigt einen Vorsprung in der Form eines Stegs. Diese Lösung hat einen spritzgiesstechnischen Vorteil. Entlang des Stegs kann die Kunststoffschmelze gut verteilt werden, sodass hierdurch die Herstellungsdauer des Auslasselements 6 verkürzt werden kann. Wie schon in Zusammenhang mit Fig. 1a, Fig. 1d sowie Fig. 2a, b erläutert wurde, ist der Hals 37 sichtbar, welcher die Auslasskanäle 6, 26 enthält.

Fig. 4 zeigt eine der Fig. 2b entsprechende Variante. Im Unterschied zu Fig. 3 sind in Fig. 4 zwei Rillen 41 am zweiten Schenkel 34 dargestellt. Diese Rillen 41 können in einer entsprechenden Positioniervorrichtung aufgenommen werden. Eine Positioniervorrichtung kann einerseits bei der Befüllung der Kartusche vorgesehen sein. Andererseits kann eine Positionierungsvorrichtung die Verbindung zwischen Auslasselement und Rohrelement beschleunigen, da aufgrund der verbesserten Einspannung des Auslasselements höhere Kräfte auf das Rohrelement aufgebracht werden können. Die Rillen 51 verlaufen entlang des gesamten Umfangs des Auslasselements.

Eine alternative Ausführungsform ist in Fig. 5 gezeigt. Zum einen werden anstelle von Vorsprüngen Ausnehmungen 60 vorgesehen. In eine derartige Ausnehmung 60 kann eine Positionierungsvorrichtung eingreifen und das Auslasselement relativ zum Rohrelement zu fixieren. Zudem ist eine Rändelung an die Aussenseite des Schenkels 34 angebracht.

Fig. 6 zeigt eine leicht abgewandelte Ausführungsform nach Fig. 4. Der zweite Schenkel 34 enthält nur eine einzige Rille 71 an seiner Aussenseite. Diese Variante kann insbesondere dann eingesetzt werden, wenn durch das Reibschweissen es zu keinem oder geringem Abrieb kommt.

In Fig. 7 ist ein Rohrelement 2 dargestellt. Das Rohrelement 4 kann an seinem zweiten Ende eine Abschrägung 39 aufweisen. Diese Abschrägung kann vorgesehen sein, um den Kolben zu führen. Ein derartiger Kolben weist zumeist mindestens eine umlaufende Dichtlippe auf. Diese Dichtlippe ist oftmals aus weichem Kunststoff gefertigt. Die Dichtlippe kann aber auch aus einem anderen Material gefertigt sein, das weicher als das Material des Rohrelements ist.

## Patentansprüche

1. Verfahren zur Herstellung einer Kartusche (1) für eine fluide Füllmasse umfassend ein Rohrelement (2, 20) und ein Auslasselement (3), wobei das Auslasselement an einem ersten Ende (4, 24) des Rohrelements (2, 20) angeordnet ist, wobei das Auslasselement (3) einen Auslasskanal (6, 26) für die fluide Füllmasse enthält, wobei der Auslasskanal (6, 26) einen Innendurchmesser (7, 27) aufweist, und das Rohrelement (2, 20) einen Innendurchmesser (8, 28) aufweist, wobei der Innendurchmesser (7, 27) des Auslasskanals kleiner als der Innendurchmesser (8, 28) des zugehörigen Rohrelements ist, wobei das Rohrelement (2, 20) einen Vorratsbereich (9, 29) umgibt, wobei der Vorratsbereich (9, 29) eine fluide Füllmasse enthalten kann, wobei der Vorratsbereich (9, 29) mit dem Auslasskanal (6, 26) derart verbunden ist, dass die fluide Füllmasse aus dem Vorratsbereich (9,29) durch den Auslasskanal (6, 26) austragbar ist, wobei das Rohrelement (2, 20) ein zweites Ende (5,25) aufweist, wobei das zweite Ende (5,25) mittels eines Kolbens verschliessbar ist, sodass die fluide Füllmasse im Vorratsbereich (9, 29) lagerbar ist, wenn der Auslasskanal (6, 26) verschlossen ist und der Kolben das zweite Ende (5, 25) des Rohrelements verschliesst, wobei der Kolben im Rohrelement (2, 20) verschiebbar ist, sodass bei Bewegung des Kolbens in Richtung des ersten Endes (4,24) des entsprechenden Rohrelements (2, 20) die fluide Füllmasse aus dem Vorratsbereich (9, 29) austragbar ist, wobei in einem ersten Schritt das Auslasselement im Spritzgiessverfahren gefertigt wird und in einem zweiten Schritt das Rohrelement (2, 20) im Extrusionsverfahren hergestellt wird, wobei in einem dritten Schritt das Auslasselement und das Rohrelement zusammengefügt werden.

2. Verfahren nach Anspruch 1, wobei das Zusammenfügen durch Schweissen, insbesondere Reibschweissen, Infrarotschweissen oder Laserschweissen erfolgt.

3. Verfahren nach Anspruch 1, wobei das Zusammenfügen durch Kleben erfolgt.

4. Kartusche (1) für eine fluide Füllmasse umfassend ein Rohrelement (2, 20) und ein Auslasselement (3), wobei das Auslasselement an einem ersten Ende (4, 24) des Rohrelements (2, 20) angeordnet ist, wobei das Auslasselement (3) einen Auslasskanal (6, 26) für die fluide Füllmasse enthält, wobei der Auslasskanal (6, 26) einen Innendurchmesser (7, 27) aufweist, und das Rohrelement (2, 20) einen Innendurchmesser (8, 28) aufweist, wobei der Innendurchmesser (7, 27) des Auslasskanals kleiner als der Innendurchmesser (8, 28) des zugehörigen Rohrelements ist, wobei das Rohrelement (2, 20) einen Vorratsbereich (9, 29) umgibt, wobei der Vorratsbereich (9, 29) eine fluide Füllmasse enthalten kann, wobei der Vorratsbereich (9, 29) mit dem Auslasskanal (6, 26) derart verbunden ist, dass die fluide Füllmasse aus dem Vorratsbereich (9,29) durch den Auslasskanal (6, 26) austragbar ist, wobei das Rohrelement (2, 20) ein zweites Ende (5,25) aufweist, wobei das zweite Ende (5,25) mittels eines Kolbens verschliessbar ist, sodass die fluide Füllmasse im Vorratsbereich (9, 29) lagerbar ist, wenn der Auslasskanal (6, 26) verschlossen ist und der Kolben das zweite Ende (5, 25) des Rohrelements verschliesst, wobei der Kolben im Rohrelement (2, 20) verschiebbar ist, sodass bei Bewegung des Kolbens in Richtung des ersten Endes (4,24) des entsprechenden Rohrelements (2, 20) die fluide Füllmasse aus dem Vorratsbereich (9, 29) austragbar ist, **dadurch gekennzeichnet, dass** das Rohrelement (2, 20) als extrudiertes Rohrelement ausgebildet ist.

5. Kartusche nach Anspruch 4, wobei das Auslasselement (3) eine dem Querschnitt des ersten Endes (4, 24) des Rohrelements (2, 20) entsprechende Nut (11, 31) aufweist, sodass das erste Ende (4, 24) des Rohrelements in die Nut (11, 31) des Auslasselements (3) einsteckbar ist.

6. Kartusche nach Anspruch 4, wobei die Nut (11, 31) einen Nutgrund (12, 32) , einen ersten Schenkel (13, 33) und einen zweiten Schenkel (14, 34) aufweist, wobei der erste Schenkel (13, 33) innerhalb des Rohrelements (2, 20) angeordnet ist und der zweite Schenkel (14, 34) ausserhalb des Rohrelements (2, 20) angeordnet ist.

7. Kartusche nach Anspruch 6, wobei zumindest einer der zweiten Schenkel (14, 34) länger als der entsprechende erste Schenkel (13, 33) ist.

8. Kartusche nach Anspruch 6 oder 7, wobei der erste Schenkel (13, 33) ein erstes Schenkelende (15, 35) aufweist, wobei der zweite Schenkel (14, 34) ein zweites Schenkelende (16, 36) aufweist, wobei zumindest einer der ersten oder zweiten Schenkel eine Wanddicke hat, welche am Nutgrund (12, 32) grösser als am entsprechenden Schenkelende ist.

9. Kartusche nach einem der Ansprüche 7 oder 8, wobei jeder der Schenkel (13, 14, 33, 34) eine dem zugehörigen Rohrelement (2, 20) zugewendete Wand aufweist, wobei der Abstand zumindest einer dieser Wände des Schenkels (13, 14, 33, 34) von dem Mantel des Rohrelements im zusammengebauten Zustand am Nutgrund kleiner als am Schenkelende ist.

10. Kartusche nach einem der Ansprüche 5 bis 9, wobei das erste Ende (4, 24) des Rohrelements (2, 20) mit der Nut (11,31) des Auslasselements (3) durch eine Schweissverbindung verbunden ist, die insbesondere als Reibschweissverbindung, Infrarotschweissverbindung oder Laserschweissverbindung ausgebildet sein kann.

11. Kartusche nach Anspruch 7, wobei das erste Ende (4, 24) des Rohrelements mit der Nut (11,31) durch eine Klebeverbindung verbunden ist.

12. Kartusche nach einem der vorhergehenden Ansprüche 4 bis 11, wobei das Auslasselement (3) eine Mehrzahl von Auslasskanälen (6, 26) enthält.

13. Kartusche nach Anspruch 12, wobei jeder der Auslasskanäle (6, 26) mit je einem Vorratsbereich (2, 20) verbunden ist.

14. Kartusche nach Anspruch 13, wobei ein erstes und ein zweites Rohrelement (2, 12) vorgesehen ist, wobei das erste Rohrelement (2) eine erste Achse (10) aufweist und das zweite Rohrelement (20) eine zweite Achse (30) aufweist und die erste und zweite Achse (10, 30) im wesentlichen parallel zueinander angeordnet sind, sodass das erste Rohrelement (2) neben dem zweiten Rohrelement (20) angeordnet ist.

15. Kartusche nach Anspruch 13, wobei ein erstes und ein zweites Rohrelement (2, 20) vorgesehen ist, wobei das erste Rohrelement (2) eine erste Achse (10) aufweist und das zweite Rohrelement (20) eine zweite Achse (30) aufweist und die erste und zweite Achse (10, 30) zusammen fallen oder nur wenig Abstand haben, sodass das erste Rohrelement (2) innerhalb des zweiten Rohrelements (20) angeordnet ist.
